# EUROPEAN PATENT APPLICATION

(11) **EP 4 614 326 A1**
(43) Date of publication of application: **10.09.2025**
(21) Application number: 23893877.3
(22) Date of filing: 22.11.2023
(51) Int. Cl.: G06F 9/54

(54) **DATA PROCESSING METHOD, APPARATUS AND SYSTEM**

(30) Priority: 22.11.2022 CN 202211465350; 22.03.2023 CN 202310286499
(71) Applicant: Huawei Cloud Computing Technologies Co., Ltd., Guiyang, Guizhou 550025 (CN)
(72) Inventor: SHOU, Chunbai, Shenzhen Guangdong 518129 (CN); XU, Lifeng, Shenzhen Guangdong 518129 (CN); CUI, Bo, Shenzhen Guangdong 518129 (CN); ZHANG, Shuai, Shenzhen Guangdong 518129 (CN)
(74) Representative: Goddar, Heinz J.
(86) International application number: PCT/CN2023/133113
(87) International publication number: WO 2024/109787

(57) **Abstract**

To efficiently process data of a service system with large traffic fluctuation, embodiments of this application provide a processing mechanism to resolve this problem, and are applied to a big data cluster for processing a job submitted by a client: When the big data cluster processes a job in a first execution mode (through streaming processing or batch processing), if a primary node determines that a switching policy is met, the primary node switches an execution mode of the job from the first execution mode to a second execution mode, and continues, based on the second execution mode, to manage one or more secondary nodes to execute the job. If the first mode is a streaming processing mode, the second execution mode is a batch processing mode; or if the first mode is a batch processing mode, the second execution mode is a streaming processing mode.

## Description

### TECHNICAL FIELD

This application relates to the big data field, and in particular, to a data processing method, a data processing apparatus, a data processing system, a computing device cluster, and a storage medium.

### BACKGROUND

Service traffic of an online service system usually encounters traffic fluctuation in a specific period, for example, daily traffic fluctuation, monthly traffic fluctuation, and traffic fluctuation caused by service system maintenance. Details are as follows:
(1) Daily traffic fluctuation: There is a traffic peak in a calendar day, and the peak is several times the average traffic. A common case is user visits on the internet. For example, a shopping website may experience concentrated access traffic throughout the day.
(2) Monthly traffic fluctuation: Traffic increases sharply at the end of a calendar month. Common cases are an order system, a settlement system, a reconciliation system, and the like. These systems perform centralized data processing at the end of a month, resulting in a sharp increase in an amount of to-be-processed data, which is dozens or even hundreds of times the daily traffic.
(3) Service system maintenance: Data replay or compensation is required for normal operations and maintenance of the service system, which leads to a sharp increase in traffic.

However, existing data processing technologies are characterized by polarization, and are clearly classified into streaming (Streaming) and batch (Batch) in terms of processing modes for data processing tasks. The batch computing mode has a high a delay and a strong processing capability. The streaming computing mode has high processing timeliness, but a small amount of processed data. Neither of the two processing modes can efficiently process data of a service system with large traffic fluctuation.

### SUMMARY

In view of this, an embodiment of this application provides a data processing method, applied to a primary node in a big data cluster. The big data cluster includes the primary node and one or more secondary nodes. The method includes: The primary node receives a job request submitted by a client, where the job request indicates the big data cluster to process a job. The primary node completes configuration of the primary node based on the job request, where the primary node is configured to manage the one or more secondary nodes to execute the job. The primary node manages, based on a first execution mode, the one or more secondary nodes to execute the job, where the first execution mode is either of a batch processing mode and a streaming processing mode. When determining that a switching policy is met, the primary node switches an execution mode of the job from the first execution mode to a second execution mode, and continues, based on the second execution mode, to manage the one or more secondary nodes to execute the job. If the first mode is the streaming processing mode, the second execution mode is the batch processing mode; or if the first mode is the batch processing mode, the second execution mode is the streaming processing mode.

According to the method provided in this embodiment of this application, capabilities of the batch processing mode and the streaming processing mode are integrated into a same primary node, so that the primary node can implement switching between different modes, to adapt to a service system with large fluctuation. This implements higher processing efficiency and improves resource utilization.

In a possible design, the job is for processing data sent in an upstream service. The method further includes: The primary node monitors an amount of unprocessed data in the data sent in the upstream service or a size of data traffic sent in the upstream service.

The switching policy is a first policy, and the first policy includes: when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or when the data traffic is greater than a third threshold, switching the execution mode from the streaming processing mode to the batch processing mode; or when the data traffic is less than a fourth threshold, switching the execution mode from the batch processing mode to the streaming processing mode. According to the method, a service may be processed in the batch processing mode during peak hours of the service and in the streaming processing mode during off-peak hours. This improves service processing efficiency and better copes with service fluctuation.

In a possible design manner, the switching policy is a second policy, and the second policy includes: when a first moment arrives, switching the execution mode from the streaming processing mode to the batch processing mode; or when a second moment arrives, switching the execution mode from the batch processing mode to the streaming processing mode, so that switching of the execution mode is completed at a specific time point.

In a possible design manner, the switching policy is a third policy, and the third policy includes: when a switching instruction sent by the client is received, switching the execution mode from the streaming processing mode to the batch processing mode or from the batch processing mode to the streaming processing mode.

In a possible design manner, that the primary node completes configuration of the primary node based on the job request includes: obtaining a configuration command about an execution mode that is included in the job request, where the configuration command instructs to configure the primary node to support mode switching between the batch processing mode and the streaming processing mode; and configuring the primary node based on the configuration command.

In a possible design manner, the job request further includes an application program of the job. That the primary node completes configuration of the primary node based on the job request includes: obtaining configuration code about an execution mode that is included in an application program, where the configuration code indicates to configure the primary node to support mode switching between the batch processing mode and the streaming processing mode; and configuring the primary node based on the configuration code.

In a possible design manner, the big data cluster further includes a shared state storage module, and that the primary node switches an execution mode of the job from the first execution mode to a second execution mode includes: The primary node reads, from the state storage module, state data generated when the job is executed in the first execution mode, and starts the second execution mode based on the state data, to continue processing the job.

In a possible design manner, the big data cluster further includes a shared state storage module, and that the primary node switches an execution mode of the job from the first execution mode to a second execution mode includes: The primary node reads, from the state storage module, state data generated when the job is executed in the first execution mode, and starts the second execution mode based on the state data, to continue processing the job.

In a possible design manner, the job is for processing the data sent in the upstream service, and the state data includes an offset of processed data and an intermediate computation result.

In a possible design manner, the switching an execution mode of the job from the first execution mode to a second execution mode further includes: adjusting a computing resource corresponding to the job from a first resource in the first execution mode to a second resource in the second execution mode, where the computing resource includes a quantity of CPU cores and a memory size.

In a possible design manner, the job request further includes a first computing resource corresponding to the streaming processing mode and a second computing resource corresponding to the batch processing mode that are configured by a user.

According to a second aspect, an embodiment of this application provides a data processing apparatus. The apparatus includes a plurality of modules, and a combination of the plurality of modules may implement the method according to any one of the first aspect or the possible designs of the first aspect.

According to a third aspect, an embodiment of this application provides a data processing apparatus. The apparatus includes: a receiving module, configured to receive a job request submitted by a client, where the job request indicates a big data cluster to process a job; a configuration module, configured to complete configuration of a primary node based on the job request, where the primary node is configured to manage one or more secondary nodes to execute the job; a control module, configured to manage, based on a first execution mode, the one or more secondary nodes to process the job, where the first execution mode is either of a batch processing mode and a streaming processing mode; and a mode switching module, configured to: when a switching policy is met, switch an execution mode of the job from the first execution mode to a second execution mode, and continue, based on the second execution mode, to manage the one or more secondary nodes to execute the job. If the first mode is the streaming processing mode, the second execution mode is the batch processing mode; or if the first mode is the batch processing mode, the second execution mode is the streaming processing mode.

In a possible design, the job is for processing data sent in an upstream service. The apparatus further includes a traffic monitoring module, configured to monitor an amount of unprocessed data in the data sent in the upstream service or traffic of the data sent in the upstream service. The switching policy is a first policy, and the first policy includes: when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or when the data traffic is greater than a third threshold, switching the execution mode from the streaming processing mode to the batch processing mode; or when the traffic of the data is less than a fourth threshold, switching the execution mode from the batch processing mode to the streaming processing mode.

In a possible design manner, the switching policy is a second policy, and the second policy includes: when a first moment arrives, switching the execution mode from the streaming processing mode to the batch processing mode; or when a second moment arrives, switching the execution mode from the batch processing mode to the streaming processing mode.

In a possible design manner, the switching policy is a third policy, and the third policy includes: when a switching instruction sent by the client is received, switching the execution mode from the streaming processing mode to the batch processing mode or from the batch processing mode to the streaming processing mode based on the switching instruction.

In a possible design manner, the configuration module is configured to: obtain a configuration command about an execution mode that is included in the job request, where the configuration command instructs to configure the primary node to support mode switching between the batch processing mode and the streaming processing mode; and configure the primary node based on the configuration command.

In a possible design manner, the job request further includes an application program of the job. The configuration module is further configured to: obtain configuration code about an execution mode in the application program, where the configuration code indicates to configure the primary node to support mode switching between the batch processing mode and the streaming processing mode; and configure the primary node based on the configuration code.

In a possible design manner, the apparatus further includes a state management module, configured to: read, from a state storage module, state data generated when the job is executed in the first execution mode, and start the second execution mode based on the state data, to continue processing the job.

In a possible design manner, the job is for processing the data sent in the upstream service, and the state data includes an offset of processed data and an intermediate computation result.

In a possible design manner, the switching module is further configured to adjust a computing resource corresponding to the job from a first resource in the first execution mode to a second resource in the second execution mode, where the computing resource includes a quantity of CPU cores and a memory size.

In a possible design manner, the job request further includes a first computing resource corresponding to the streaming processing mode and a second computing resource corresponding to the batch processing mode that are configured by a user.

According to a fourth aspect, an embodiment of this application provides a data processing system. The system includes: a primary node, configured to: receive a job request submitted by a client, and complete configuration of the primary node based on the job request, where the primary node is further configured to manage one or more secondary nodes to execute a job; and the secondary node, configured to execute the job based on a first execution mode, where the first execution mode is either of a batch processing mode and a streaming processing mode, where the primary node is further configured to: when a switching policy is met, switch an execution mode of the job from the first execution mode to a second execution mode, and continue, based on the second execution mode, to manage the one or more secondary nodes to execute the job. If the first mode is the streaming processing mode, the second execution mode is the batch processing mode; or if the first mode is the batch processing mode, the second execution mode is the streaming processing mode.

In a possible design, the job is for processing data sent in an upstream service. The primary node is further configured to monitor an amount of unprocessed data in the data sent in the upstream service or traffic of the data sent in the upstream service. The switching policy is a first policy, and the first policy includes: when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or when the data traffic is greater than a third threshold, switching the execution mode from the streaming processing mode to the batch processing mode; or when the traffic of the data is less than a fourth threshold, switching the execution mode from the batch processing mode to the streaming processing mode.

In a possible design manner, the switching policy is a second policy, and the second policy includes: when a first moment arrives, switching the execution mode from the streaming processing mode to the batch processing mode; or when a second moment arrives, switching the execution mode from the batch processing mode to the streaming processing mode.

In a possible design manner, the switching policy is a third policy, and the third policy includes: when a switching instruction sent by the client is received, switching the execution mode from the streaming processing mode to the batch processing mode or from the batch processing mode to the streaming processing mode based on the switching instruction.

In a possible design manner, the primary node is further configured to obtain a configuration command about an execution mode that is included in the job request, where the configuration command instructs to configure the primary node to support mode switching between the batch processing mode and the streaming processing mode.

In a possible design manner, the job request further includes an application program of the job. The primary node is further configured to obtain configuration code about an execution mode in the application program, where the configuration code indicates to configure the primary node to support switching between the batch processing mode and the streaming processing mode.

In a possible design manner, the system further includes: a shared state storage module, configured to store state data generated in different execution modes. The secondary node is configured to: when executing the job based on the first execution mode, store generated state data in the shared state storage module. When switching the execution mode from the first execution mode to the second execution mode, the primary node is further configured to read, from the state storage module, the state data generated when the job is executed in the first execution mode, and start the second execution mode based on the state data, to continue processing the job.

In a possible design manner, the job is for processing the data sent in the upstream service, and the state data includes an offset of processed data and an intermediate computation result.

In a possible design manner, a computing resource corresponding to the job is adjusted from a first resource in the first execution mode to a second resource in the second execution mode, where the computing resource includes a quantity of CPU cores and a memory size.

In a possible design manner, the job request further includes a first computing resource corresponding to the streaming processing mode and a second computing resource corresponding to the batch processing mode that are configured by a user.

According to a fifth aspect, this application provides a computing device cluster. The computing device includes at least one computing device, and the at least one computing device includes at least one processor and at least one storage. The at least one storage is configured to store instructions, and the at least one processor executes the instructions stored in the at least one storage, to enable the computing device cluster to perform the data method in any one of the first aspect or the possible implementations of the first aspect.

According to a sixth aspect, this application provides a computer-readable storage medium. The computer-readable storage medium stores instructions. When the instructions are run on at least one computing device, the at least one computing device is enabled to perform the method in any one of the first aspect or the implementations of the first aspect.

According to a seventh aspect, this application provides a computer program product including instructions. When the computer program product runs on at least one computing device, the computing device cluster is enabled to perform the data processing method in any one of the first aspect or the implementations of the first aspect.

In this application, based on the implementations of the foregoing aspects, the implementations may be further combined to provide more implementations.

### BRIEF DESCRIPTION OF DRAWINGS

FIG. 1 is a diagram of a network architecture of a big data cluster 100 according to an embodiment of this application;
FIG. 2 is a diagram of another network architecture of a big data cluster 100 according to an embodiment of this application;
FIG. 3 is a diagram 200 of a system architecture of a big data cluster 100 according to an embodiment of this application;
FIG. 4 is a flowchart of a data processing method according to an embodiment of this application;
FIG. 5 is an example diagram of a data processing apparatus 500 according to an embodiment of this application;
FIG. 6 is a diagram of a structure of a computing device 600 according to an embodiment of this application; and
FIG. 7 shows a computing device cluster according to an embodiment of this application.

### DESCRIPTION OF EMBODIMENTS

First, to facilitate understanding of technical solutions and embodiments provided in this application, terms such as batch processing and streaming processing and a conventional technology are described herein.

Streaming processing (Batch process): The streaming processing means processing data immediately when a continuous data flow is generated and analyzing streaming data in real time.

Batch processing (Streaming process): The batch processing means processing a large amount of data in batches within a specific time span.

State (State): The state may be understood as "intermediate information (Intermediate Information) "in data processing. Stateful (Stateful) means that processing an entered record depends on a result of processing a previous record. Each entered record can read and update the result. The result is intermediate information between different data processing, and the intermediate information is referred to as a state. State data may include both service data and metadata. For example, Flink provides different state managers to manage a state, and the state may be excessively large. Any application program that runs basic service logic needs to remember an event or intermediate information, to access the event or the intermediate information at a later time point, for example, when a next event is received or after specific duration. Application programs that run basic service logic all need to perform computation based on specific intermediate results, namely, states, for example, perform a deduplication operation, a CEP detection operation, and Exactly Once. Therefore, the state is an important part in a Flink processing system.
(1) In streaming processing in the conventional technology, before starting a streaming job, a user needs to estimate, based on a traffic peak of a service, computing resources required for the job. Then, the user submits the job, and sets the estimated computing resources in a submitted request. After the streaming job is started, computing resource consumption remains unchanged during job running. If the computing resources are to be adjusted after the job is started, the user needs to manually stop the job, reset a size of the computing resources, and then start the job. The stop of the streaming job also needs to be triggered and canceled by the user. The computing resources are released only after the job is stopped. In addition, in a running process of the streaming processing, an intermediate computation result (namely, an intermediate state) needs to be stored.
   It can be learned that a streaming processing mode can implement real-time and fast data processing, but has the following problems: (a) An extremely high delay occurs in the streaming processing or a streaming processing program is interrupted. (b) Because the computing resources of the streaming job are applied for based on the application traffic peak, when daily traffic is small, a large quantity of computing resources are in an idle state, resulting in a serious waste of computing resources.
(2) In batch processing in the conventional technology, before starting a batch job, a user needs to estimate computing resources required for processing a current batch service. Then, the user submits the job, and sets the estimated resources in a submitted request. When running of the batch job is completed, the batch job automatically exits without requiring manual intervention. In addition, in a batch processing mode, intermediate state data is not stored.

It can be learned that although the batch processing mode has a capability of processing a large amount of data within a specific time span, the batch job stops only after all currently submitted tasks are processed. Therefore, a data processing delay of the batch processing is high, which is usually dozens of minutes.

In addition, because the streaming processing mode requires state (state) data, and the state data is not persisted in the batch processing, the batch processing mode and the streaming processing mode cannot collaborate with each other, and switching between the batch processing mode and the streaming processing mode cannot be implemented.

Based on the foregoing problem, embodiments of this application provide a data processing method, to implement switching between a streaming processing mode and a batch processing mode. In this method, when traffic increases sharply, a data flow peak can be quickly processed based on an advantage of the batch processing mode, and then a processing mode is switched to the streaming processing mode, to process a real-time data flow.

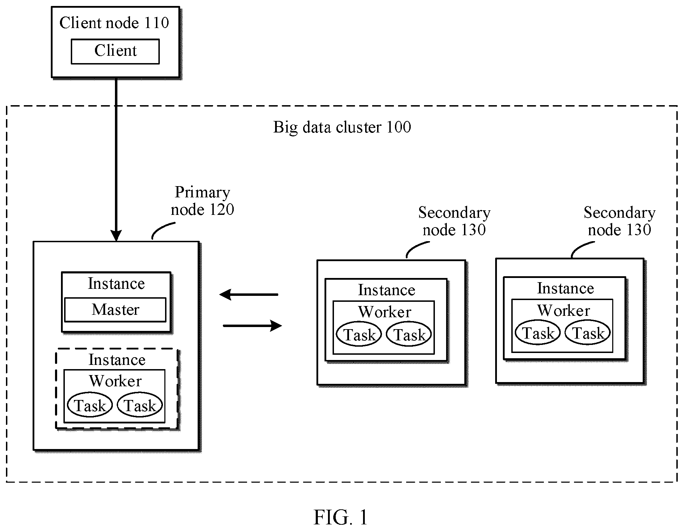

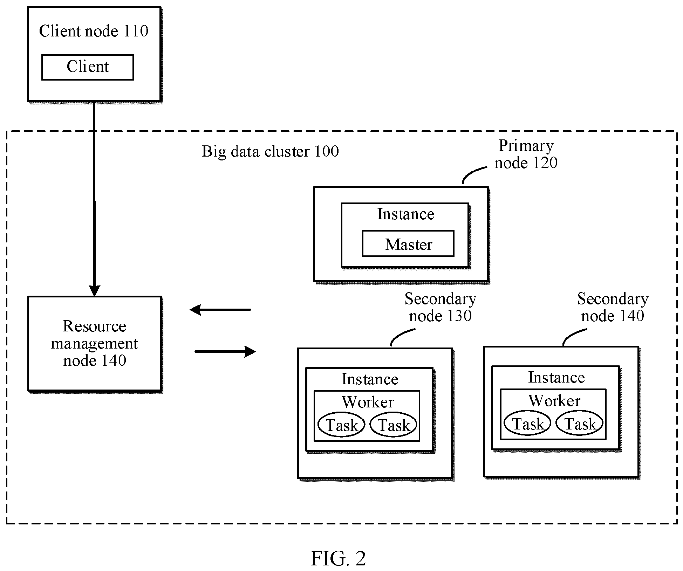

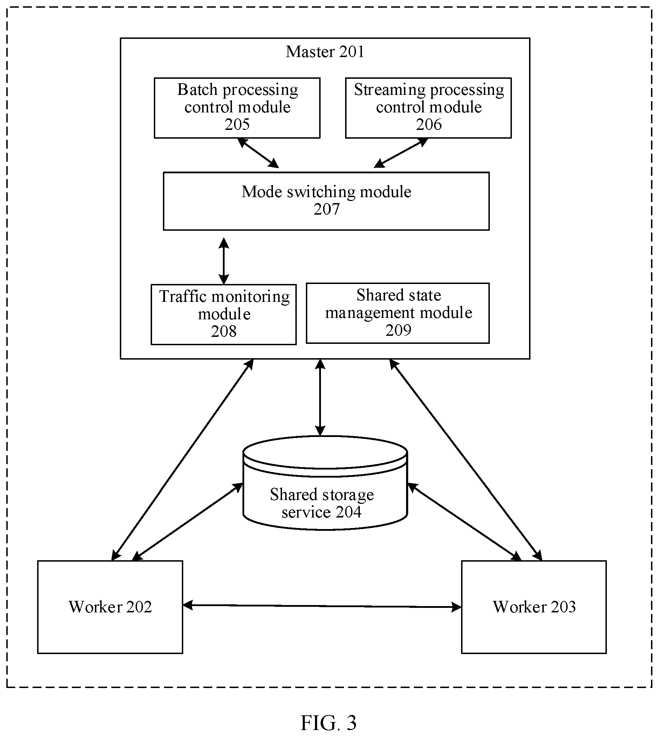

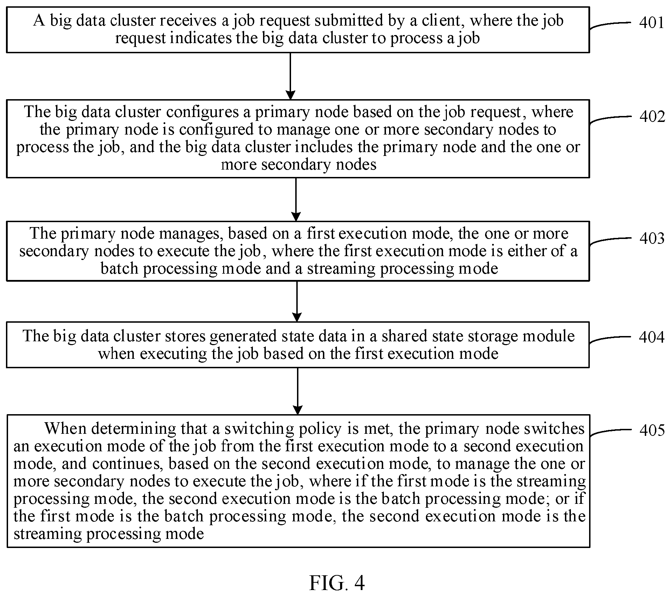

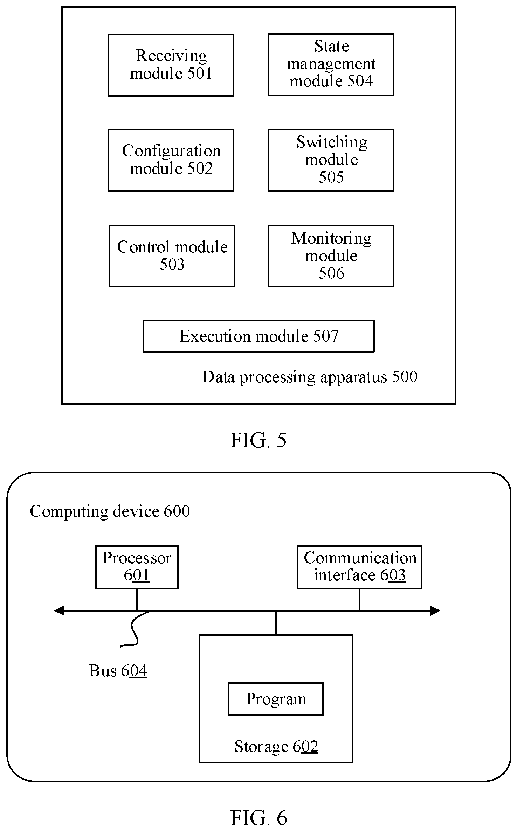

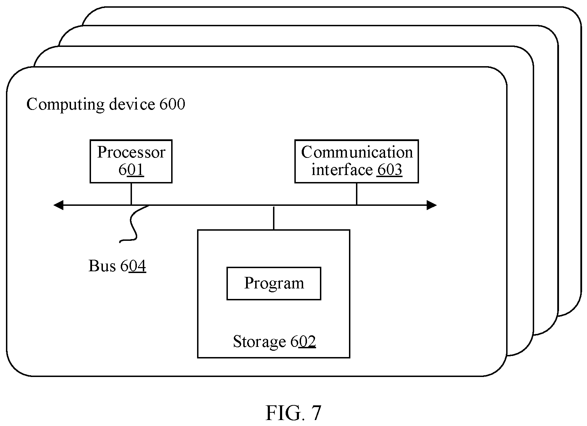

The following separately describes the technical solutions provided in this application from a plurality of perspectives such as a system architecture (FIG. 1 and FIG. 2), a method implementation (FIG. 4), a software apparatus (FIG. 3 and FIG. 5), and a hardware apparatus (FIG. 6 and FIG. 7). The following first describes the system architecture in embodiments of this application by using examples.

FIG. 1 is a diagram of a network architecture of a big data cluster 100 according to an embodiment of this application. The big data cluster 100 includes one primary node and one or more secondary nodes. The primary node may communicate with the secondary node, and the secondary nodes may communicate with each other. A user accesses the primary node in the big data cluster 100 by using a client. In a possible implementation, a client node 110, the primary node 120, and the secondary nodes 130 may be physical machines or virtual machines. The three types of nodes are described as follows:
(1) The client node 110 is a node on which the user submits a job request to the big data cluster. The job request submitted by the user to the big data cluster by using the client includes a job name (a unique identifier), program code, a configuration instruction, and the like. The job request is for submitting a job to the primary node in the big data cluster and apply for a corresponding computing resource. Optionally, the client node 110 may be further configured to compile and package code and a related configuration file into a JAR, for example, a JAR package including a job graph, a logical data flow graph, all classes and libraries, and another resource. The client node 110 submits packaged code and a packaged configuration file to the big data cluster. Then, the client may be disconnected, or may maintain a connection to receive a process report.
(2) The primary node 120 is a node on which a primary service (for example, a Java process) of a job is located, and is also referred to as a master node. The primary node 120 is configured to manage job execution and resource allocation. In a big data cluster, a plurality of jobs may be executed at the same time, and each job has a primary service of the job.

Specifically, the primary node 120 is configured to receive the job request (for example, a data analysis job) submitted by the client 110, and load the foregoing JAR package to create an instance (for example, a container), to run the primary service of the job. The instance is referred to as a master instance.

In an optional implementation, before the client submits the job, the master instance has been run on the primary node.

Then, after creating the master instance, the primary node further selects some nodes and allocates a batch of instance resources to the nodes, to execute specific tasks. The nodes that execute these tasks are referred to as secondary nodes. The master is configured to: convert the job into task sets that can be executed in parallel, and schedule and allocate the task sets to secondary services for running, and is for job life cycle management, task scheduling, state management, mode switching, traffic monitoring, and the like.

(3) The secondary node 130 is a place where the job is actually executed, and is also referred to as a worker node or a slave node. The secondary node 130 is managed by the primary node 120, and is responsible for creating one or more compute instances (for example, virtual machines and containers) with independent computing capabilities on the current node to execute a specific task (task). The secondary node 130 includes one or more compute instances (referred to as workers), and each compute instance may execute one or more tasks.

In a possible embodiment, one node may be used as both a primary node and a secondary node. A node on which a worker runs is a secondary node, and a node on which a master runs is referred to as a primary node. For example, for two nodes in the big data cluster 110, both the two nodes may be set as secondary nodes (on which workers run). In this case, one node (for example, the node 120) is both a primary node and a secondary node, in other words, both a master and a worker run on the node 120.

FIG. 2 is a diagram of another network architecture of a big data cluster 100 according to an embodiment of this application. In addition to a primary node and secondary nodes, the big data cluster 100 may further include a resource management node 140. The resource management node may be a physical machine or a virtual machine. In the architecture shown in FIG. 2, functions of four types of nodes are described as follows:
(1) A client node 110 is a node on which a user submits a job request to the big data cluster. For details, refer to the descriptions of the client node in FIG. 1. It should be noted that the job request is for applying to the resource manager 150 in the cluster for creation of a corresponding resource.
(2) The primary node 120 is a node on which a primary service (for example, a Java process) of a job is located, and is also referred to as a master node. The primary node 120 is configured to manage job execution and apply to the resource management node 150 for a resource. In a big data cluster, a plurality of jobs may be executed at the same time, and each job has a primary service of the job.
   After a master instance is created on the primary node 120, the primary node 120 applies to the resource management node 150 for resource allocation, to create instances to execute specific tasks. The instances that execute these specific tasks are referred to as secondary nodes. The master is configured to: convert the job into task sets that can be executed in parallel, and schedule and allocate the task sets to secondary services for running, and is for job life cycle management, task scheduling, state management, mode switching, traffic monitoring, and the like.
(3) The secondary nodes 130 and 140 are places where the job is actually executed, and are also referred to as worker nodes or slave nodes. The secondary nodes 130 and 140 communicate with the primary node 120, and are responsible for creating one or more compute instances (for example, virtual machines and containers) with independent computing capabilities on the current node to execute a specific task (task). The secondary node includes one or more compute instances (referred to as workers), and each compute instance may execute one or more tasks.
(4) The resource management node 150 is configured to manage resource provision, reclaiming, and allocation. After receiving the job request submitted by the client, the resource management node 150 selects one node (for example, the node 110) in the big data cluster to load a JAR package of the job, so as to start the master instance and run the primary service of the job. The node 110 on which the master instance runs is referred to as a primary node. Then, the resource management node 150 selects some nodes based on a request of the primary node and allocates a batch of instance resources to the nodes, to execute specific tasks. The nodes that execute these tasks are referred to as secondary nodes. Correspondingly, in the architecture in FIG. 1, a function of the resource management node 150 is performed by the primary node 120.

In a possible embodiment, one node in FIG. 2 may alternatively be used as both a primary node and a secondary node.

Optionally, in another network architecture, a process of the master alternatively runs on the client node 101, and the master interacts with each worker node in the cluster.

Further, a network architecture and a service scenario described in embodiments of the present invention are intended to describe the technical solutions of embodiments of the present invention more clearly, and do not constitute a limitation on the technical solutions provided in embodiments of the present invention. A person of ordinary skill in the art may learn that, with evolution of a system architecture and emergence of a new service scenario, the technical solutions provided in embodiments of the present invention are also applicable to similar technical problems.

Based on the foregoing network architecture, FIG. 3 is a diagram of a system architecture of a big data cluster according to this application. The figure simplifies actual forms of a master and a worker, and shows only a relationship between the master and the worker. A form of the master, the worker, or a client may include an instance such as a physical machine, a virtual machine, or a container. The master, the worker, and the client may be deployed in a same instance or different instances, for example, may run on different virtual machines, or may run in different containers on a same virtual machine. A deployment manner of the master, the worker, and the client is not limited in this application.

FIG. 3 is a diagram 200 of a system architecture of a big data cluster 100. A system may support automatic switching between a batch processing mode and a batch processing mode. FIG. 3 includes a master instance 201, worker instances 202 and 203, and a shared storage 204.

In the existing batch processing mode, state data is not retained. In a streaming processing mode, state data is stored in a local hard disk or a memory of a node on which a currently running task is located, and the state data is cleared as the running ends. Specifically, in the existing batch processing mode, the state data is stored in the local hard disk or the memory of the node, and is automatically cleared after running of a job is completed. In this embodiment of this application, the state data is persisted, and both the state data in the batch processing mode and the state data in the batch processing mode are stored in the shared storage 205, and the state is not cleared as the job ends.

In a conventional technology, a type (the batch processing mode or the streaming processing mode) of a primary node is specified by a user when the user submits the job or an application. However, in an instance of this application, to implement switching between the batch processing mode and the streaming processing mode for the job, this embodiment of this application proposes the master instance 201 in a batch-streaming hybrid mode as a primary node. For the big data cluster 200 that supports the batch-streaming hybrid mode, the user may not specify a specific batch/streaming processing mode when submitting the job. After the job is submitted, the processing mode is automatically adapted based on a specific actual amount of data. In another possible embodiment, the big data cluster 200 adds a hybrid mode (implementing batch-streaming hybrid scheduling and running) based on the existing batch processing mode and streaming processing mode, to support automatic conversion between the batch processing mode and the streaming processing mode. Specifically, in addition to the streaming processing mode and the batch processing mode, there is a new "batch-streaming hybrid mode" when the job is submitted.

Specifically, the master instance 201 in this embodiment of this application is configured to schedule a task, monitor traffic, collect state information, and manage a worker in the cluster. FIG. 3 shows an example of modules. The master instance 201 may include a batch processing control module 205, a streaming processing control module 206, a mode switching module 207, a monitoring module 208, and a state management module 209.

Specific functions of the modules are described as follows:
The batch processing management module 205 is responsible for task management and resource allocation of a batch processing job in the entire cluster, splitting the batch processing job, and allocating jobs obtained through splitting to workers for execution. Specifically, the batch processing control module 205 splits the batch processing job into a plurality of task sets, and allocates corresponding computing resources to submitted jobs based on usage of the workers in the cluster to process tasks. During batch processing, each job is mapped to a graph (graph) when being scheduled. The graph can represent data execution logic and describe all phases in a data computing process. Then, the generated graph is submitted to a task scheduler for batch processing, and the task scheduler is responsible for submitting a task in the graph to the worker for running. A task running on each compute instance of the worker is allocated herein.

The graph includes various operators that are connected in a logical sequence. In a possible manner, these operators may be classified into three types: a source operator, a transformation operator, and a sink operator. The source operator is responsible for reading a data source, the transformation operator is responsible for processing data by using various operators, and the sink operator is responsible for outputting data. In a possible manner, the graph (Graph) may be a directed acyclic graph (Directed Acyclic Graph, DAG), for example, a DAG in Spark. The DAG includes some edges and some vertices, an edge represents an RDD (data encapsulation and abstraction in Spark), and a vertex represents an operator on the RDD. There is also a similar concept in Flink. A Flink program is mapped to a graph in which all operators are connected in a logical sequence, and the graph is referred to as a "logical data flow" (logical data flow) or a "data flow graph" (data flow graph).

The streaming processing management module 206 is responsible for task management and resource allocation of a streaming processing job in the entire cluster, splitting the streaming processing job, and allocating jobs obtained through splitting to workers for execution. Specifically, the streaming processing management module 206 splits the streaming processing job into a plurality of task sets, and allocates corresponding computing resources to submitted jobs based on usage of the workers in the cluster to process tasks. Similarly, during streaming processing, each job is also mapped to a graph (graph) when being scheduled. Then, the generated graph is submitted to a task scheduler for batch processing, and the task scheduler is responsible for submitting a task in the graph to the worker for running. A task running on each compute instance of the worker is allocated herein.

The mode switching module 207 is responsible for implementing mode switching. Switching manners are as follows:
(1) Automatic switching based on a traffic change/an amount of overstocked data
   Data is continuously sent to the big data cluster in an upstream service. When the primary node detects that traffic of the data sent in the upstream service or the amount of the overstocked data reaches a threshold (configured in a switching policy), switching is performed. For example, after a traffic detection module of the primary node finds that an amount of unprocessed data of the upstream service reaches 100,000 records, switching from streaming processing to batch processing is performed, and resources, namely, a 30-core CPU and a memory of 120 G is used for batch processing. After the batch processing, the traffic detection module continues to monitor the overstocked upstream data. If it is found that the amount of the unprocessed upstream data (the amount of the overstocked data) is less than 3,000 records, switching to streaming processing is performed, and running based on resources, namely, a 10-core CPU and a memory of 80 G is performed. Otherwise, the batch processing continues.
(2) Automatic switching based on critical points of a time period, where automatic mode switching may be implemented at specific time. Examples are as follows:
   Critical points are set for a traffic peak period in a calendar day, and automatic switching is implemented at the critical points. For example, if a shopping website may have an access peak period from 20:00 to 23:00 in a day, switching to the batch processing mode may be performed at 20:00, and switching from the batch processing mode back to the streaming processing mode is performed at 23:00.

When traffic increases sharply in a calendar month, switching to the batch processing mode is performed. For example, automatic switching to the batch processing mode is performed in the last two days of each month, and switching back to the streaming processing mode is performed at other time.

### (3) Switching triggered through an external interface

The user operates to stop the streaming processing mode and start the batch processing mode, or stop the streaming processing mode and start the batch processing mode. Computing continuity is implemented by using state data shared by the batch processing mode and the streaming processing mode. For example, due to a requirement of a service system on normal operations and maintenance, a data replay or compensation operation needs to be performed. As a result, traffic increases sharply. In this case, the user may initiate a mode switching instruction on a client, so that a processing mode of the master is switched from the streaming processing mode to the batch processing mode.

The traffic monitoring module 208 is configured to: monitor an amount of overstocked data or traffic of data in the current system, and specifically, monitor the amount of unprocessed data in the data sent in the upstream service or the traffic of the data sent in the upstream service. The shared state management module 209 is configured to manage a shared state in the streaming processing mode and the batch processing mode, to ensure the computing continuity after mode switching is implemented. In this embodiment of this application, regardless of the batch processing mode or the streaming processing mode, the shared state data needs to be recorded, and the state data of the batch processing mode or the streaming processing mode is continuously updated after new inflow data is received.

The shared state data includes but is not limited to an offset consumed by the upstream data, an intermediate state (for example, an intermediate aggregation result) of logical computation, and the like. For example, during running in the streaming processing mode and the batch processing mode, each job is mapped to a graph (graph) when being scheduled. The graph includes various operators for data reading, data processing, and data output. For example, the source operator includes a plurality of operators for reading data, the transform operator includes various operators for logical operations, and the sink operator includes a plurality of operators for outputting results. In a possible implementation, these operators take a snapshot of a current state, and store the snapshot to a state backend. The source operator stores an offset (offset) of the current source operator as a shared state. When mode switching occurs, the source operator may resubmit an offset and re-consume data starting from a previous storing position. The transform operator stores a current aggregation result obtained through computation. When mode switching occurs, the transform operator may continue the computation based on the previously stored aggregation result again.

For example, if data is being processed in the streaming processing mode currently, the latest shared state data includes: A streaming job consumes data with an offset=1,000, and an aggregation result is 2,000. After switching to the batch processing mode is performed, consumption is performed from 1,000, and computation continues based on the aggregation result of 2,000.

FIG. 3 further includes the shared storage service 204. The shared storage service 204 may be deployed on an instance in the big data cluster 100, and is configured to provide a persistent data storage service for other instances (for example, a primary node and a secondary node). For example, the shared storage service 204 may be an HDFS (distributed file system). When executing a task, the secondary node may periodically store state data in the shared storage service 204. When performing mode switching, the primary node reads required state data from the shared storage service 204, and indicates, based on the state data, the secondary node to continue to execute the current task.

It should be noted that the foregoing module function division is merely used as an example, and any one of the modules 205 to 209 may be configured to perform the method in this application.

FIG. 4 is a flowchart of a data processing method according to an embodiment of this application. As shown in FIG. 4, the method may include the following steps.

Step 401: A big data cluster receives a job request submitted by a client, where the job request indicates the big data cluster to process a job.

A primary node or a resource management node in the big data cluster receives the job request submitted by the client. The client is configured to provide a user with a capability of submitting a user task (a streaming job, a batch streaming job, or batch-streaming switching) to the big data cluster (to the primary node or the management node). The user submits the job request to the big data cluster by using the client, where the job request includes a job name (a unique identifier), program code, a configuration instruction, and the like.

In an optional manner, the user may set an execution mode (for example, by using a command line or an option of a user interface) based on the configuration instruction when submitting the job request.

In another optional manner, the user may alternatively configure an execution mode by using a segment of code in the submitted program code (for example, an application program). The primary node and a secondary node run the job based on the application program.

Optionally, the client may be further configured to: after compiling the application program, package and submit a compiled application program to the primary node.

In a possible embodiment, the execution mode of the big data cluster in this embodiment of this application can be configured as a batch processing mode, a streaming processing mode, or a hybrid mode. The hybrid mode is a new execution mode newly proposed in embodiments of this application. "Hybrid" means that switching between the batch processing mode and the streaming processing mode may be supported in a process of processing a same job by the primary node and the secondary node, to better utilize advantages of the two modes, so that processing efficiency is improved, and computing resources are saved. For example, if the user sets the execution mode as the "hybrid mode" when submitting the job request, the big data cluster configures, for the job, a primary node that supports both the batch processing mode and streaming processing mode and can switch the execution mode.

It should be noted that the "hybrid mode" is merely a name, and may also be referred to as another name in practice, for example, an "automatic mode" or an "adaptive mode". However, all the names support a function about the "hybrid mode" described in embodiments of this application.

Optionally, the user may alternatively configure an execution mode when submitting no task request. In this case, the big data cluster in this embodiment of this application configures, by default, the primary node that executes the job to be in the "hybrid mode", in other words, the big data cluster automatically selects one of the batch processing mode and the streaming processing mode for the job request submitted by the user, and switches the execution mode when a switching policy is met.

Step 402: The big data cluster configures the primary node based on the job request, where the primary node is configured to manage one or more secondary nodes to process the job, and the big data cluster includes the primary node and the one or more secondary nodes.

After receiving the job request sent by the client, the big data cluster configures one primary node based on a parameter in the job request.

In a possible implementation, the big data cluster obtains a configuration command about an execution mode that is included in the job request, where the configuration command indicates to configure the primary node to support mode switching between the batch processing mode and the streaming processing mode; and then the big data cluster configures the primary node based on the configuration command.

In another possible implementation, the job request further includes an application program of the job. The big data cluster obtains configuration code about an execution mode that is included in the application program, where the configuration code indicates to configure the primary node to support mode switching between the batch processing mode and the streaming processing mode; and then the big data cluster configures the primary node based on the configuration command.

Optionally, before the job request is submitted, if the primary node already exists, the primary node completes configuration of the primary node.

A compute instance in which the primary node is located may be a container, a virtual machine, or a physical machine. In this embodiment of this application, the container is used as an example. To be specific, forms of the primary node and the secondary node in the big data may be containers. The primary node is configured to manage the secondary node to execute the job. For example, the primary node splits the job into different task sets, and delivers the task sets to different secondary nodes for execution.

In a possible implementation, after completing the configuration, the primary node applies to a resource manager (or the resource management node) in the big data cluster for a resource of the one or more secondary nodes based on a requirement.

Step 403: The primary node manages, based on a first execution mode, the one or more secondary nodes to execute the job, where the first execution mode is either of the batch processing mode and the streaming processing mode.

In this embodiment of this application, the primary node supports controlling, in different execution modes, the secondary node to execute the job, and the primary node includes a batch processing control module and a streaming processing control module, so that the primary node can manage job execution in different modes.

Optionally, the batch processing control module and the streaming processing control module may alternatively be in a same module.

For example, a single job submitted by the user may be processed in the streaming processing mode first, then the mode is switched to the batch processing mode, and vice versa. This is different from that a task can be processed in only one execution mode in a conventional technology. For example, if the user specifies that the task is processed in the batch processing mode, the task is executed in the batch processing mode throughout the entire process.

At a moment, the primary node manages processing of the job based on the first execution mode, where the first execution mode is either of the batch processing mode and the streaming processing mode.

If the moment is an initial moment, and in a possible implementation, the user specifies the "hybrid mode", or a system executes a hybrid model by default, at the initial moment of executing the job, the primary node may select a mode as an initial execution mode based on initial data traffic (reference is made to a "first policy" below), directly set a default initial execution mode (for example, set the initial execution mode as a streaming processing execution mode by default at the initial moment), or select the initial execution mode based on a boundary of initial data (select batch-streaming processing for a bounded data flow and streaming processing for an unbounded data flow).

Step 404: The big data cluster stores generated state data in a shared state storage module when executing the job based on the first execution mode.

First, intermediate information generated in any data processing process may be considered as state data. This is not limited in this embodiment of this application. In this embodiment of this application, regardless of the batch processing mode or the streaming processing mode,
when the big data cluster processes a job, the job is mapped to a graph (for example, a DAG). The graph includes a plurality of operators. The primary node splits these operators into a plurality of subtasks based on the graph. The subtasks are run on different instances (namely, workers and subnodes). These operators are for data reading, various data processing, data output, and the like. The data processing may include various operators for data processing, such as a transform operator, a split operator, an aggregation operator, and a join operator. The state data may be understood as a variable of a subtask (a task of an operator) on a current instance. The variable records intermediate information and historical information generated during data flow processing.

For example, the state data may include:
(1) Data offset offset: The data offset records upstream data that has flowed in or data that has been processed. For example, that the offset is 3,000 indicates that a 3,000^{th} piece of data is processed currently, a value of the offset is read again next time, and processing starts from a 3,001^{st} piece of data.
(2) Historical value of an element: For example, an element that previously flows in is cached in a form of state data. For example, a historical temperature t=36 in a data flow of a temperature sensor is recorded, and whether a temperature continuously increases may be determined next time based on t.
(3) Generated intermediate computation result: For example, the aggregation operator performs aggregation computation on data in a time window to obtain aggregated data sum=1,000.

In a possible implementation, when executing the job based on the first execution mode, the secondary node stores the generated state data in the shared state storage module.

Step 405: When the switching policy is met, the primary node switches the execution mode from the first execution mode to a second execution mode, and the big data cluster continues to process the job based on the second execution mode, where the second mode is either of the batch processing mode and the streaming processing mode, and the first execution mode and the second execution mode are different modes.

If the first mode is the streaming processing mode, the second execution mode is the batch processing mode; or if the first mode is the batch processing mode, the second execution mode is the streaming processing mode.

The switching policy specifies cases in which the primary node performs mode switching, and the switching policy includes three types:

### (1) Automatic switching based on an amount of overstocked data/traffic (the first policy)

The first policy is specifically performing mode switching based on the amount of the overstocked data and a traffic change of data. The data is data sent in an upstream service, and the job is for processing the data. Details are as follows:

The primary node continuously monitors an amount of unprocessed data in the data sent in the upstream service or a size of data traffic sent in the upstream service.

When the amount of unprocessed data (namely, the amount of the overstocked data) is greater than a first threshold, the primary node switches the execution mode from the streaming processing mode to the batch processing mode. When the amount of the unprocessed upstream data is less than a second threshold, the primary node switches the execution mode from the batch processing mode to the streaming processing mode. For example, after detecting that the amount of unprocessed data reaches 100,000 (the first threshold) records, the primary node switches the mode from streaming processing to batch processing. After batch processing is performed, the primary node continues to monitor the overstocked upstream data. If it is found that the amount of the unprocessed upstream data (the amount of the overstocked data) is less than 3,000 (the second threshold) records, switching to streaming processing is performed, and running based on resources, namely, a 10-core CPU and a memory of 80 G is performed. Otherwise, the batch processing continues.

Alternatively, when the data traffic is greater than a third threshold (for example, the traffic increases sharply), the primary node switches the execution mode from the streaming processing mode to the batch processing mode. When the traffic of the upstream data is less than a fourth threshold, the primary node switches the execution mode from the batch processing mode to the streaming processing mode. For example, the cluster currently executes the job through streaming processing. When detecting that traffic of inflow data reaches 30,000 pieces/second (the third threshold), in other words, the traffic increases sharply, the primary node switches the execution mode from streaming processing to batch processing. After batch processing is performed, the primary node continues to monitor the traffic of the data. If it is found that the traffic of the data is less than 5,000 pieces/second (the fourth threshold), switching to streaming processing is performed. Otherwise, the batch processing continues.

The four thresholds in the first policy may be configured by the user. For example, the user may configure these thresholds (for example, set these thresholds by using a command line or through a user interface) when submitting a job application.

### (2) Time monitoring-based policy (second policy)

The second policy is specifically as follows: When a first moment arrives, the primary node switches the execution mode from the streaming processing mode to the batch processing mode. When a second moment arrives, the primary node switches the execution mode from the batch processing mode to the streaming processing mode.

In an optional manner, the first moment and the second moment are any two time points in a range of a day, a month, or a year.

### (3) Policy triggered through an external interface (third policy)

The third policy is as follows: When receiving a switching instruction sent by the client, the primary node switches the execution mode from the streaming processing mode to the batch processing mode or from the batch processing mode to the streaming processing mode based on the switching instruction. The switching instruction is transmitted to the big data cluster through the external interface.

In a possible embodiment, when the big data cluster switches from the first execution mode to the second execution mode, a corresponding computing resource is further adjusted, to be specific, a first resource quantity in the first execution mode is adjusted to a second resource quantity in the second execution mode. Different execution modes have corresponding computing resource quantities. The computing resource includes a quantity of CPU cores and a memory size. For example, the current big data cluster is processing a job in the batch processing mode, and used computing resources are a 30-core CPU and a memory of 120 G. If the big data cluster switches to the streaming processing mode at this time, corresponding computing resources are also switched to a 10-core CPU and a memory of 80 G.

Optionally, the first resource quantity and the second resource quantity may be adaptively determined by the big data cluster based on a service data amount, or specific values may be set by the user. For example, the user may further need to configure the first resource quantity and the second resource quantity when configuring the switching policy.

Optionally, different computing resource quantities may be further configured for different switching policies. For example, an adaptive resource quantity switching manner is configured for the first policy, a fixed resource quantity switching manner is configured for the second policy or the third policy, and specific values are set by the user.

Specifically, when switching the execution mode from the first execution mode to the second execution mode, the primary node needs to read, from the shared state storage module, state data generated in the first execution mode, and start the second execution mode based on the state data, to continue processing the job. When execution mode switching occurs, we read corresponding state data from the shared state storage module and start the second execution mode based on the state data, to continue processing of the job. The following provides an example:

When switching the execution mode from the streaming processing mode to the batch processing mode, the primary node needs to obtain, from the shared state storage module (for example, a storage service), an offset of data that has been previously consumed in the streaming processing mode. For example, if 1,000 pieces of data have been consumed in the streaming processing mode, the offset offset is 1,000. After switching the execution mode to the batch processing mode, the primary node indicates the big data cluster to start processing data from a 1,001^{st} piece of data. The primary node further reads an intermediate computation result from the shared state storage module. If data with an offset=1,000 is consumed, and an intermediate aggregation result is 2,000, after the execution mode is switched to the batch processing mode, the big data cluster continues consumption from 1,000 and continues aggregation computation based on the result of 2,000 to process the current task.

Similarly, in switching from batch processing to streaming processing, intermediate state data (for example, the foregoing offset and intermediate computation result) also needs to be read to ensure data computing continuity.

FIG. 5 further provides an example of a data processing apparatus 500. The apparatus 500 may implement the method in FIG. 4 in embodiments of this application by using software, hardware, or a combination thereof. For example, the apparatus 500 includes a receiving module 501, a configuration module 502, a control module 503, a state management module 504, and a switching module 505.

The receiving module 501 is configured to receive a job request submitted by a client, where the job request indicates a big data cluster to process a job.

The configuration module 502 is configured to configure a primary node based on the job request, where the primary node is configured to manage one or more secondary nodes to process the job. Specifically, the configuration module 502 obtains a configuration command about an execution mode that is included in the job request, where the configuration command instructs to configure the primary node to support mode switching between a batch processing mode and a streaming processing mode; and configures the primary node based on the configuration command. Optionally, the job request further includes an application program of the job. The configuration module 502 is further configured to: obtain configuration code about an execution mode in the application program, where the configuration code indicates to configure the primary node to support mode switching between a batch processing mode and a streaming processing mode; and configure the primary node based on the configuration code.

The control module 503 is configured to manage execution of the job based on a first execution mode, where the first execution mode is either of the batch processing mode and the streaming processing mode. If the first mode is the streaming processing mode, the second execution mode is the batch processing mode. If the first mode is the batch processing mode, the second execution mode is the streaming processing mode. Optionally, the control module 503 may alternatively be split into two modules, which are respectively configured to control batch processing and streaming processing.

The state management module 504 is configured to read, from a state storage module, state data generated in the first execution mode, and start the second execution mode based on the state data, to continue processing the job. Optionally, the state management module 504 is further configured to: when executing the job based on the first execution mode, store generated state data in the shared state storage module. The job is for processing data sent in an upstream service, and the state data includes an offset of processed data in the data sent in the upstream service and an intermediate computation result of the data.

The switching module 505 is configured to: when a switching policy is met, switch the execution mode from the first execution mode to the second execution mode, where the big data cluster continues to process the job based on the second execution mode, the second mode is either of the batch processing mode and the streaming processing mode, and the first execution mode and the second execution mode are different modes. This embodiment of this application provides three types of switching policies. Details are as follows:

The first policy includes: when an amount of unprocessed data is greater than a first threshold, switching the execution mode from the streaming processing mode to the batch processing mode; or when an amount of unprocessed data is less than a second threshold, switching the execution mode from the batch processing mode to the streaming processing mode; or when the data traffic is greater than a third threshold, switching the execution mode from the streaming processing mode to the batch processing mode; or when traffic of data is less than a fourth threshold, switching the execution mode from the batch processing mode to the streaming processing mode.

The second policy includes: when a first moment arrives, switching the execution mode from the streaming processing mode to the batch processing mode; or when a second moment arrives, switching the execution mode from the batch processing mode to the streaming processing mode.

The third policy includes: when a switching instruction sent by the client is received, switching the execution mode from the streaming processing mode to the batch processing mode or from the batch processing mode to the streaming processing mode based on the switching instruction.

The switching module is further configured to adjust a computing resource corresponding to the job from a first resource in the first execution mode to a second resource in the second execution mode, where the computing resource includes a quantity of CPU cores and a memory size.

The monitoring module 506 is configured to monitor the amount of unprocessed data in the data sent in the upstream service or the traffic of the data sent in the upstream service.

Optionally, the data processing apparatus 500 further includes one or more execution modules 507. The execution module 507 is configured to execute a specific task in the job, and is managed by the control module 503.

It should be noted that the foregoing module function division is merely used as an example, and any one of the modules 501 to 506 may be configured to implement the methods or functions in FIG. 3 and FIG. 4 in this application. In other words, in another embodiment, the inference module switching module 505 may be configured to perform any step of the method in embodiments of this application, and other modules may also be configured to perform any step of the method in embodiments of this application. Steps that the modules 501 to 506 are responsible for implementing may be specified as required, and a module A, a module B, and a module C are respectively used to implement different steps in the method in embodiments of this application, to implement all functions of the data processing apparatus 500.

For the modules in FIG. 3 and FIG. 5, the switching module 505 is used as an example to describe implementations (a software manner and a hardware manner) of the modules in embodiments of this application. Similarly, for an implementation of each of the other modules in FIG. 3, refer to the implementation of the switching module 505.

The module is used as an example of a software functional unit. For example, the switching module 505 may be an application program or a code block running on a computer device. The computer device may be at least one of computing devices such as a physical host, a virtual machine, and a container. Further, there may be one or more computer devices. For example, the switching module 505 may be an application program running on a plurality of hosts/virtual machines/containers. It should be noted that the plurality of hosts/virtual machines/containers configured to run the application program may be distributed in a same availability zone (availability zone, AZ), or may be distributed in different AZs. The plurality of hosts/virtual machines/containers configured to run the application program may be distributed in a same region (region) or may be distributed in different regions. Generally, one region may include a plurality of AZs. Similarly, the plurality of hosts/virtual machines/containers configured to run the application program may be distributed in a same virtual private cloud (virtual private cloud, VPC), or may be distributed in a plurality of VPCs. Generally, one region may include a plurality of VPCs, and one VPC may include a plurality of AZs.

The module is used as an example of a hardware function unit. For example, the batch switching module 505 may include at least one computing device, for example, a server. Alternatively, the module A may be a device or the like that is implemented by using an application-specific integrated circuit (application-specific integrated circuit, ASIC) or a programmable logic device (programmable logic device, PLD). The PLD may be implemented by a complex programmable logic device (complex programmable logic device, CPLD), a field programmable gate array (field programmable gate array, FPGA), generic array logic (generic array logic, GAL), or any combination thereof. The plurality of computing devices included in the switching module 505 may be distributed in a same AZ, or may be distributed in different AZs. The plurality of computing devices included in the module A may be distributed in a same region, or may be distributed in different regions. Similarly, the plurality of computing devices included in the module A may be distributed in a same VPC, or may be distributed in a plurality of VPCs. The plurality of computing devices may be any combination of computing devices such as a server, an ASIC, a PLD, a CPLD, an FPGA, and GAL.

An embodiment of this application provides a data processing system (a figure is omitted). The system includes: a primary node, configured to: receive a job request submitted by a client, and complete configuration of the primary node based on the job request, where the primary node is further configured to manage one or more secondary nodes to execute a job; and the secondary node, configured to execute the job based on a first execution mode, where the first execution mode is any one execution mode of a batch processing mode and a streaming processing mode, where the primary node is further configured to: when a switching policy is met, switch an execution mode of the job from the first execution mode to a second execution mode, and continue, based on the second execution mode, to manage the one or more secondary nodes to execute the job. If the first mode is the streaming processing mode, the second execution mode is the batch processing mode; or if the first mode is the batch processing mode, the second execution mode is the streaming processing mode.

Optionally, the job is for processing data sent in an upstream service. The primary node is further configured to monitor an amount of unprocessed data in the data sent in the upstream service or traffic of the data sent in the upstream service. The switching policy is a first policy, and the first policy includes: when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or when the data traffic is greater than a third threshold, switching the execution mode from the streaming processing mode to the batch processing mode; or when the traffic of the data is less than a fourth threshold, switching the execution mode from the batch processing mode to the streaming processing mode.

Optionally, the switching policy is a second policy, and the second policy includes: when a first moment arrives, switching the execution mode from the streaming processing mode to the batch processing mode; or when a second moment arrives, switching the execution mode from the batch processing mode to the streaming processing mode.

Optionally, the switching policy is a third policy, and the third policy includes: when a switching instruction sent by the client is received, switching the execution mode from the streaming processing mode to the batch processing mode or from the batch processing mode to the streaming processing mode based on the switching instruction.

Optionally, the primary node is further configured to obtain a configuration command about an execution mode that is included in the job request, where the configuration command instructs to configure the primary node to support mode switching between the batch processing mode and the streaming processing mode.

Optionally, the job request further includes an application program of the job. The primary node is further configured to obtain configuration code about an execution mode in the application program, where the configuration code indicates to configure the primary node to support switching between the batch processing mode and the streaming processing mode.

Optionally, the system further includes: a shared state storage module, configured to store state data generated in different execution modes. The secondary node is configured to: when executing the job based on the first execution mode, store generated state data in the shared state storage module. When switching the execution mode from the first execution mode to the second execution mode, the primary node is further configured to read, from the state storage module, the state data generated when the job is executed in the first execution mode, and start the second execution mode based on the state data, to continue processing the job.

Optionally, the job is for processing the data sent in the upstream service, and the state data includes an offset of processed data and an intermediate computation result.

Optionally, a computing resource corresponding to the job is adjusted from a first resource in the first execution mode to a second resource in the second execution mode, where the computing resource includes a quantity of CPU cores and a memory size.

Optionally, the job request further includes a first computing resource corresponding to the streaming processing mode and a second computing resource corresponding to the batch processing mode that are configured by a user.

FIG. 6 is a diagram of a structure of a computing device 600. The foregoing model training apparatus may be deployed on the computing device. The computing device may be a computing device (for example, a server) in a cloud environment, a computing device in an edge environment, or a terminal device or the like that may be specifically configured to implement functions of any one or more modules in the foregoing apparatus 500. The computing device 600 may be used in the primary node, the secondary node, or the client node in embodiments of this application.

As shown in FIG. 6, the computing device 600 includes a processor 601, a storage 602, a communication interface 603, and a bus 604. The processor 601, the storage 602, and the communication interface 603 communicate with each other through the bus 604. The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is for representing the bus in FIG. 6, but this does not mean that there is only one bus or only one type of bus. The communication interface 603 is configured to communicate with the outside.

The processor 601 may be a central processing unit (central processing unit, CPU), an application-specific integrated circuit (application-specific integrated circuit, ASIC), a graphics processing unit (graphics processing unit, GPU), or one or more integrated circuits. The processor 601 may alternatively be an integrated circuit chip with a signal processing capability. In an implementation process, functions of the modules in the model training apparatus may be completed by using an integrated logic circuit of hardware in the processor 401 or instructions in a form of software. The processor 601 may alternatively be a general-purpose processor, a data signal processor (digital signal processor, DSP), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor or the processor may be any conventional processor or the like. The method disclosed with reference to embodiments of this application may be directly performed and completed by a hardware decoding processor or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the storage 602. The processor 601 reads information in the storage 602, and completes functions of the modules in the data apparatus in combination with hardware of the processor 601.

The storage 602 may include a volatile memory (volatile memory), for example, a random access memory (random access memory, RAM). The storage 602 may further include a non-volatile memory (non-volatile memory), for example, a read-only memory (read-only memory, ROM), a flash memory, an HDD, or an SSD.

The storage 602 stores executable code, and the processor 601 executes the executable code to perform the data processing method provided in embodiments of this application, to separately implement functions of the modules 501 to 507.

FIG. 7 shows a computing device cluster according to an embodiment of this application. The computing device cluster includes at least one computing device 600. The computing device may be a server, for example, a central server, an edge server, or a local server in a local data center. In some embodiments, the computing device may alternatively be a terminal device, for example, a desktop computer, a notebook computer, or a smartphone.

In a possible implementation, the one or more computing devices 600 in the computing device cluster may alternatively be configured to implement functions of some modules in the data processing apparatus 600, in other words, configured to execute some instructions of the method in embodiments of this application. In other words, a combination of the one or more computing devices 600 may jointly deploy modules in the data processing apparatus 500, to execute instructions of the data processing method provided in embodiments of this application.

It should be noted that storages 602 in different computing devices 600 in the computing device cluster may store different instructions, to perform some functions of the data processing apparatus 500, in other words, the instructions stored in the storages 602 in different computing devices 600 may implement functions of one or more modules of the apparatus 500.

An embodiment of this application further provides a computer-readable storage medium. The computer-readable storage medium stores instructions. When the instructions are run on one or more computing devices, the one or more computing devices are enabled to perform the method performed by the modules of the data processing apparatus in the foregoing embodiments.

An embodiment of this application further provides a computer program product. When the computer program product is executed by one or more computing devices, the one or more computing devices perform any one of the foregoing data processing methods. The computer program product may be a software installation package. When any one of the foregoing data processing methods needs to be used, the computer program product may be downloaded and executed on a computer.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or by dedicated hardware, including a dedicated integrated circuit, a dedicated CPU, a dedicated storage, a dedicated component, and the like. Generally, all functions completed by a computer program can be easily implemented by using corresponding hardware. In addition, specific hardware structures used to implement a same function may be various, for example, an analog circuit, a digital circuit, or a dedicated circuit. However, as for this application, a software program implementation is an optimal implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of procedures or functions according to embodiments of this application are generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

## Claims

1. A data processing method, applied to a primary node in a big data cluster, wherein the big data cluster comprises the primary node and one or more secondary nodes, and the method comprises:
receiving, by the primary node, a job request submitted by a client, wherein the job request indicates the big data cluster to process a job;
completing, by the primary node, configuration of the primary node based on the job request, wherein the primary node is configured to manage the one or more secondary nodes to execute the job;
managing, by the primary node based on a first execution mode, the one or more secondary nodes to execute the job, wherein the first execution mode is either of a batch processing mode and a streaming processing mode; and
when determining that a switching policy is met, switching, by the primary node, an execution mode of the job from the first execution mode to a second execution mode, and continuing, based on the second execution mode, to manage the one or more secondary nodes to execute the job, wherein
if the first mode is the streaming processing mode, the second execution mode is the batch processing mode; or if the first mode is the batch processing mode, the second execution mode is the streaming processing mode.

2. The method according to claim 1, wherein the job is for processing data sent in an upstream service, and the method further comprises:
monitoring, by the primary node, an amount of unprocessed data in the data sent in the upstream service or a size of data traffic sent in the upstream service, wherein
the switching policy is a first policy, and the first policy comprises:
when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or
when the data traffic is greater than a third threshold, switching the execution mode from the streaming processing mode to the batch processing mode; or when the data traffic is less than a fourth threshold, switching the execution mode from the batch processing mode to the streaming processing mode.

3. The method according to claim 1, wherein the switching policy is a second policy, and the second policy comprises:
when a first moment arrives, switching the execution mode from the streaming processing mode to the batch processing mode; or
when a second moment arrives, switching the execution mode from the batch processing mode to the streaming processing mode.

4. The method according to claim 1, wherein the switching policy is a third policy, and the third policy comprises:
when a switching instruction sent by the client is received, switching the execution mode from the streaming processing mode to the batch processing mode or from the batch processing mode to the streaming processing mode.

5. The method according to any one of claims 1 to 4, wherein the completing, by the primary node, configuration of the primary node based on the job request comprises:
obtaining a configuration command about an execution mode that is comprised in the job request, wherein the configuration command instructs to configure the primary node to support mode switching between the batch processing mode and the streaming processing mode; and
configuring the primary node based on the configuration command.

6. The method according to any one of claims 1 to 4, wherein the job request further comprises an application program of the job, and the completing, by the primary node, configuration of the primary node based on the job request comprises:
obtaining configuration code about an execution mode that is comprised in the application program, wherein the configuration code indicates to configure the primary node to support mode switching between the batch processing mode and the streaming processing mode; and
configuring the primary node based on the configuration code.

7. The method according to any one of claims 1 to 6, wherein the big data cluster further comprises a shared state storage module, and the switching, by the primary node, an execution mode of the job from the first execution mode to a second execution mode comprises:
reading, by the primary node from the state storage module, state data generated when the job is executed in the first execution mode, and starting the second execution mode based on the state data, to continue processing the job.

8. The method according to claim 7, wherein the job is for processing the data sent in the upstream service, and the state data comprises an offset of processed data and an intermediate computation result.

9. The method according to any one of claims 1 to 8, wherein the switching an execution mode of the job from the first execution mode to a second execution mode further comprises:
adjusting a computing resource corresponding to the job from a first resource in the first execution mode to a second resource in the second execution mode, wherein the computing resource comprises a quantity of CPU cores and a memory size.

10. The method according to any one of claims 1 to 9, wherein the job request further comprises a first computing resource corresponding to the streaming processing mode and a second computing resource corresponding to the batch processing mode that are configured by a user.

11. A data processing apparatus, wherein the apparatus comprises:
a receiving module, configured to receive a job request submitted by a client, wherein the job request indicates a big data cluster to process a job;
a configuration module, configured to complete configuration of a primary node based on the job request, wherein the primary node is configured to manage one or more secondary nodes to execute the job;
a control module, configured to manage, based on a first execution mode, the one or more secondary nodes to process the job, wherein the first execution mode is either of a batch processing mode and a streaming processing mode; and
a mode switching module, configured to: when a switching policy is met, switch an execution mode of the job from the first execution mode to a second execution mode, and continue, based on the second execution mode, to manage the one or more secondary nodes to execute the job, wherein
if the first mode is the streaming processing mode, the second execution mode is the batch processing mode; or if the first mode is the batch processing mode, the second execution mode is the streaming processing mode.

12. The apparatus according to claim 11, wherein the job is for processing data sent in an upstream service; and
the apparatus further comprises: a traffic monitoring module, configured to monitor an amount of unprocessed data in the data sent in the upstream service or a size of data traffic sent in the upstream service, wherein
the switching policy is a first policy, and the first policy comprises:
when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or
when the data traffic is greater than a third threshold, switching the execution mode from the streaming processing mode to the batch processing mode; or when the data traffic is less than a fourth threshold, switching the execution mode from the batch processing mode to the streaming processing mode.

13. The apparatus according to claim 11, wherein the switching policy is a second policy, and the second policy comprises:
when a first moment arrives, switching the execution mode from the streaming processing mode to the batch processing mode; or
when a second moment arrives, switching the execution mode from the batch processing mode to the streaming processing mode.

14. The apparatus according to claim 11, wherein the switching policy is a third policy, and the third policy comprises:
when a switching instruction sent by the client is received, switching the execution mode from the streaming processing mode to the batch processing mode or from the batch processing mode to the streaming processing mode based on the switching instruction.

15. The apparatus according to any one of claims 11 to 14, wherein the configuration module is configured to:
obtain a configuration command about an execution mode that is comprised in the job request, wherein the configuration command instructs to configure the primary node to support mode switching between the batch processing mode and the streaming processing mode; and
configure the primary node based on the configuration command.

16. The apparatus according to any one of claims 11 to 14, wherein the job request further comprises an application program of the job, and the configuration module is further configured to:
obtain configuration code about an execution mode in the application program, wherein the configuration code indicates to configure the primary node to support mode switching between the batch processing mode and the streaming processing mode; and
configure the primary node based on the configuration code.

17. The apparatus according to any one of claims 11 to 16, wherein the apparatus further comprises:
a state management module, configured to: read, from the state storage module, state data generated when the job is executed in the first execution mode, and start the second execution mode based on the state data, to continue processing the job.

18. The apparatus according to claim 17, wherein the job is for processing the data sent in the upstream service, and the state data comprises an offset of processed data and an intermediate computation result.

19. The apparatus according to any one of claims 11 to 18, wherein
the switching module is further configured to adjust a computing resource corresponding to the job from a first resource in the first execution mode to a second resource in the second execution mode, wherein the computing resource comprises a quantity of CPU cores and a memory size.

20. The apparatus according to any one of claims 11 to 19, wherein the job request further comprises a first computing resource corresponding to the streaming processing mode and a second computing resource corresponding to the batch processing mode that are configured by a user.

21. A data processing system, wherein the system comprises:
a primary node, configured to: receive a job request submitted by a client, and complete configuration of the primary node based on the job request, wherein
the primary node is further configured to manage one or more secondary nodes to execute a job; and
the secondary node, configured to execute the job based on a first execution mode, wherein the first execution mode is either of a batch processing mode and a streaming processing mode, wherein
the primary node is further configured to: when a switching policy is met, switch an execution mode of the job from the first execution mode to a second execution mode, and continue, based on the second execution mode, to manage the one or more secondary nodes to execute the job, wherein
if the first mode is the streaming processing mode, the second execution mode is the batch processing mode; or if the first mode is the batch processing mode, the second execution mode is the streaming processing mode.

22. The system according to claim 21, wherein the job is for processing data sent in an upstream service, and the primary node is further configured to monitor an amount of unprocessed data in the data sent in the upstream service or size of data traffic sent in the upstream service, wherein
the switching policy is a first policy, and the first policy comprises:
when the amount of unprocessed data is greater than a first threshold, switching the execution mode from the streaming processing mode to the batch processing mode; or when the amount of unprocessed data is less than a second threshold, switching the execution mode from the batch processing mode to the streaming processing mode; or
when the data traffic is greater than a third threshold, switching the execution mode from the streaming processing mode to the batch processing mode; or when the data traffic is less than a fourth threshold, switching the execution mode from the batch processing mode to the streaming processing mode.

23. The system according to claim 21, wherein the switching policy is a second policy, and the second policy comprises:
when a first moment arrives, switching the execution mode from the streaming processing mode to the batch processing mode; or
when a second moment arrives, switching the execution mode from the batch processing mode to the streaming processing mode.

24. The system according to claim 21, wherein the switching policy is a third policy, and the third policy comprises:
when a switching instruction sent by the client is received, switching the execution mode from the streaming processing mode to the batch processing mode or from the batch processing mode to the streaming processing mode based on the switching instruction.

25. The system according to any one of claims 21 to 24, wherein the primary node is further configured to obtain a configuration command about an execution mode that is comprised in the job request, wherein the configuration command instructs to configure the primary node to support mode switching between the batch processing mode and the streaming processing mode.

26. The system according to any one of claims 21 to 25, wherein the job request further comprises an application program of the job, and the primary node is further configured to:
obtain configuration code about an execution mode in the application program, wherein the configuration code indicates to configure the primary node to support switching between the batch processing mode and the streaming processing mode.

27. The system according to any one of claims 21 to 26, wherein the system further comprises:
a shared state storage module, configured to store state data generated in different execution modes, wherein
the secondary node is configured to store generated state data in the shared state storage module when executing the job based on the first execution mode; and
when switching the execution mode from the first execution mode to the second execution mode, the primary node is further configured to:
read, from the state storage module, the state data generated when the job is executed in the first execution mode, and start the second execution mode based on the state data, to continue processing the job.

28. The system according to claim 27, wherein the job is for processing the data sent in the upstream service, and the state data comprises an offset of processed data and an intermediate computation result.

29. The system according to any one of claims 21 to 28, wherein the primary node is further configured to:
adjust a computing resource corresponding to the job from a first resource in the first execution mode to a second resource in the second execution mode, wherein the computing resource comprises a quantity of CPU cores and a memory size.

30. The system according to any one of claims 21 to 29, wherein the job request further comprises a first computing resource corresponding to the streaming processing mode and a second computing resource corresponding to the batch processing mode that are configured by a user.

31. A computing device cluster, comprising at least one computing device, wherein each computing device comprises a processor and a memory; and
the processor in the at least one computing device is configured to execute instructions stored in the memory in the at least one computing device, to enable the computing device cluster to perform the method according to any one of claims 1 to 10.

32. A computer-readable storage medium, comprising computer program instructions, wherein when the computer program instructions are executed by a computing device cluster, the computing device cluster performs the method according to any one of claims 1 to 10.
